# EUROPEAN PATENT SPECIFICATION

(11) **EP 0 635 974 B1**
(45) Date of publication and mention of the grant of the patent: **24.03.1999**
(21) Application number: 94111612.1
(22) Date of filing: 26.07.1994
(51) Int. Cl.: H04N 5/44, H04N 5/445, H04N 7/087, A47B 77/08, F24C 7/08, A47B 81/06

(54) **Built in television for kitchen furniture, comprising an electronic cookery book**
In ein Küchenmöbel eingebautes Fernsehgerät mit elektronischem Kochbuch
Récepteur de télévision incorporé dans un meuble de cuisine avec un livre de cuisine électronique

(43) Date of publication of application: 25.01.1995
(60) Divisional application: 96113992.0
(73) Proprietor: EDICO S.r.l., I-00197 Roma (IT)
(72) Inventor: d'Errico, Federico, Dr., I-00186 Roma (IT)
(74) Representative: Notaro, Giancarlo

(56) References cited:
- EP-A- 0 103 707
- EP-A- 0 149 735
- EP-A- 0 387 880
- EP-A- 0 483 463
- DE-A- 3 120 723
- DE-A- 3 513 817
- DE-A- 4 229 731
- US-A- 4 628 351
- US-A- 4 633 297
- PATENT ABSTRACTS OF JAPAN vol. 16, no. 196 (E-1200) 12 May 1992 & JP-A-04 029 497 (MATSUSHITA ELECTRIC IND CO)
- PATENT ABSTRACTS OF JAPAN vol. 8, no. 209 (E-268) 22 September 1984 & JP-A-59 095 782 (TOSHIBA KK)
- PATENT ABSTRACTS OF JAPAN vol. 16, no. 277 (C-0954) 22 June 1992 & JP-A-04 073 027 (MATSUSHITA ELECTRIC IND CO) 9 March 1992
- PATENT ABSTRACTS OF JAPAN vol. 14, no. 520 (E-1002) 14 November 1990 & JP-A-02 219 380 (MATSUSHITA ELECTRIC IND CO) 31 August 1990
- PATENT ABSTRACTS OF JAPAN vol. 16, no. 300 (E-1227) 2 July 1992 & JP-A-04 081 097 (MISAWA HOMES CO LTD) 13 March 1992
- PATENT ABSTRACTS OF JAPAN vol. 15, no. 53 (M-1079) 7 February 1991 & JP-A-02 285 160 (MATSUSHITA ELECTRIC IND CO) 22 November 1990
- PATENT ABSTRACTS OF JAPAN vol. 16, no. 287 (M-1271) 25 June 1992 & JP-A-04 076 168 (MATSUSHITA ELECTRIC IND CO) 10 March 1992
- PATENT ABSTRACTS OF JAPAN vol. 15, no. 250 (E-1082) 26 June 1991 & JP-A-03 078 387 (MISAWA HOMES CO LTD) 3 April 1991
- PATENT ABSTRACTS OF JAPAN vol. 15, no. 250 (E-1082) 26 June 1991 & JP-A-03 078 386 (MISAWA HOMES CO LTD) 3 April 1991
- PATENT ABSTRACTS OF JAPAN vol. 17, no. 510 (M-1480) 14 September 1993 & JP-A-05 133 115 (SEKISUI HOUSE LTD) 28 May 1993
- PATENT ABSTRACTS OF JAPAN vol. 17, no. 342 (C-1076) 29 June 1993 & JP-A-05 042 059 (MATSUSHITA ELECTRIC IND CO) 23 February 1993
- PATENT ABSTRACTS OF JAPAN vol. 17, no. 459 (M-1467) 23 August 1993 & JP-A-05 106 350 (SEKISUI HOUSE LTD) 27 April 1993

## Description

The present invention refers to a television.

It is known that nowadays every family generally owns more than one television, and that, usually, one of them is situated in the kitchen, being that this is the room of the house that is most frequently used.

It is also known that kitchens are, more recently, almost always furnished with so-called fitted kitchens, made up of shelving units and floor based cabinets; said furnishings also provide for building in, or built in, electric appliances, usually found in the kitchen, such as the refrigerator and the dishwasher; such built in arrangements provide for the colours and materials of the electrical appliances to be in complete harmony with those of the actual furnishings.

It is known from DE-A-31 20 723 a kitchen apparatus with electronic controlling device. Such apparatus shows a holding frame with various supporting elements, power supplying elements and control elements. A number of kitchen modules can be attached to the holding frame. Attaching the modules to the holding frame they are connected to power supplying devices and to electronic control devices.

It is also known from US-A-4,628,351 a cooking apparatus with a video display, which includes a video signal processing unit and is able to process TV programs, video signals from video cameras from any desired location (such as an outside entrance or infant's room) and cooking information stored in a microprocessor.

The aim of the present invention is that of indicating how it is possible to realise a television particularly apt for being utilised in a kitchen and which shows for the user advantages over the known apparatuses.

For reaching such aim the subject of the present invention is a television system having the characteristics listed in the attached main claim.

Further characteristics and advantages of the present invention shall result in being clear from the following description and annexed drawings supplied purely as an explanatory and non-limiting example, wherein:
- figure 1 represents a frontal view of a television according to the invention;
- figure represents two possible arrangements of the television according to the invention, in a kitchen;
- figure 3 schematically represents the block diagram of the electrical circuit of the television according to the invention;
- figure 4 represents an example of a video image containing a cookery recipe.

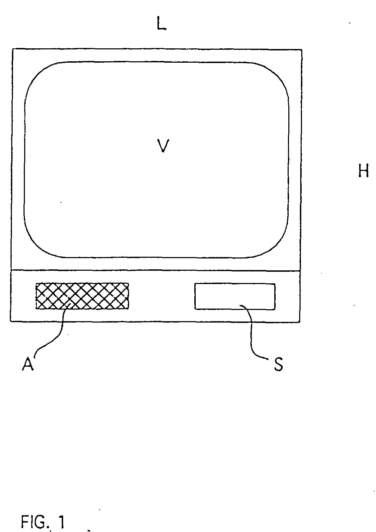

Figure 1 represents a frontal view of a television according to the invention; in figure 1 the reference symbol V indicates the television screen; with the reference symbol A a frontal speaker is indicated; with the reference symbol S an access flap to the commands of the apparatus is indicated; reference symbol L indicates the width of the television's cabinet; and finally with reference symbol H the height of the television's cabinet is indicated.

Being as that kitchen furniture is generally of a width of 45 or 60 cm, the width L of the television has been chosen in the present example as 45cm; as a result the screen S results in being 20'' (diagonal), which is a suitable dimension for a kitchen; naturally it is also possible to utilise a different screen, for example 26'' (with a dimension L of 60cm).

The dimension H, in the given figure, is 40cm.

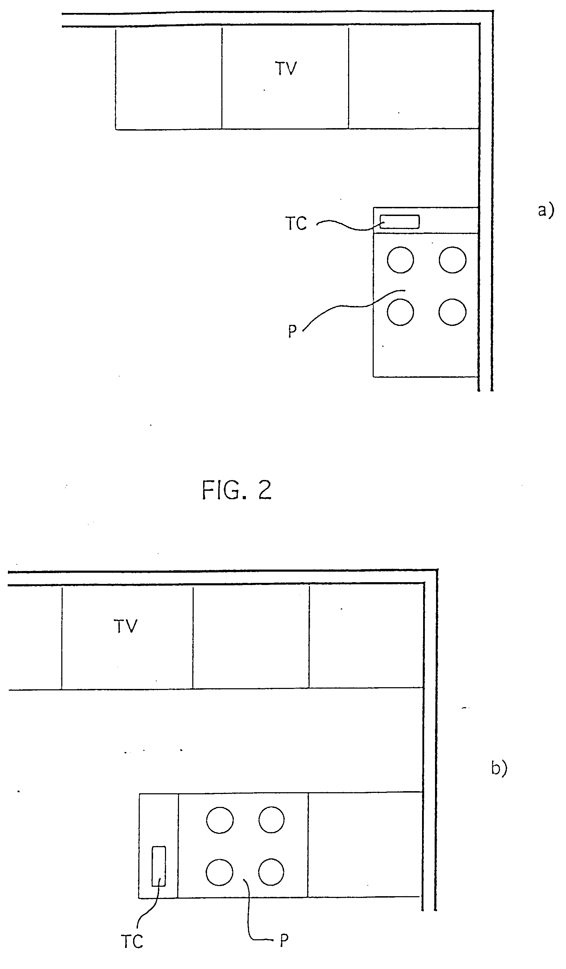

In figure 2 two possible arrangements of the television according to the invention are represented in a kitchen; in part a) of figure 2 a corner of a kitchen is schematically represented; a television is seen towards the top, indicated with the symbol TV, against a wall (and naturally arranged above a base cabinet, or incorporated in a column, as is usual for example with ovens); on the other wall, to the right, a cooking hob is seen, indicated with symbol P.

To the side of the cooking hob P the television's remote control unit TC is indicated, that shall be described in detail in the following. In part b) of figure 2 another possible arrangement is schematically represented: to the top, against a wall, incorporated in a series of fitted cabinets, the television can be seen, indicated with the symbol TV; below a dependent cabinet is visible to which a cooking hob is incorporated, indicated with the symbol P. Also here, to the right of the hob, the remote control of the television is visible, indicated with the symbol TC.

Such remote control unit, that functions according to the principle of infrared rays, must be directed towards the television for its correct functioning. A housing for the remote control unit, to the side of the cooking hob, is provided, so as that the user, that is cooking, or is about to cook, has it easily at hand without having to search for it, as is usually the case; with the aims of ease of use it is provided that upon pressing the remote control, it is spring released from its housing, remaining however anchored to its support; said support can be revolved so as to allow it to be pointed in the direction of the television. After use the remote control is made to enter once more in its housing by pressing an appropriate button situated on the edge of the hob. Naturally it is provided that the remote control be waterproof and dust proof, according to known techniques already used for electrical appliances.

The cabinet that has to house the television, in the case that it is not simply free standing on a shelf, has to provide for, in its lower section, a so called chimney such as those used, for example, with built in refrigerators. This detail has the aim of permitting a suitable air flow for the television that could otherwise suffer from breakdowns caused by overheating of the television itself.

Being as that the television is destined for use above all in the kitchen, particular attention has to be given to the safety of the user, that may have wet hands or may touch the television with one hand and a tap with the other and therefore find himself under the potential risk of getting an electric shock; therefore not only do all the standards issued by competent bodies (CEI Standards) have to be rigorously followed, but eventual external commands must be protected against eventual infiltrations of liquids or dust that could have negative results on the electrical insulation.

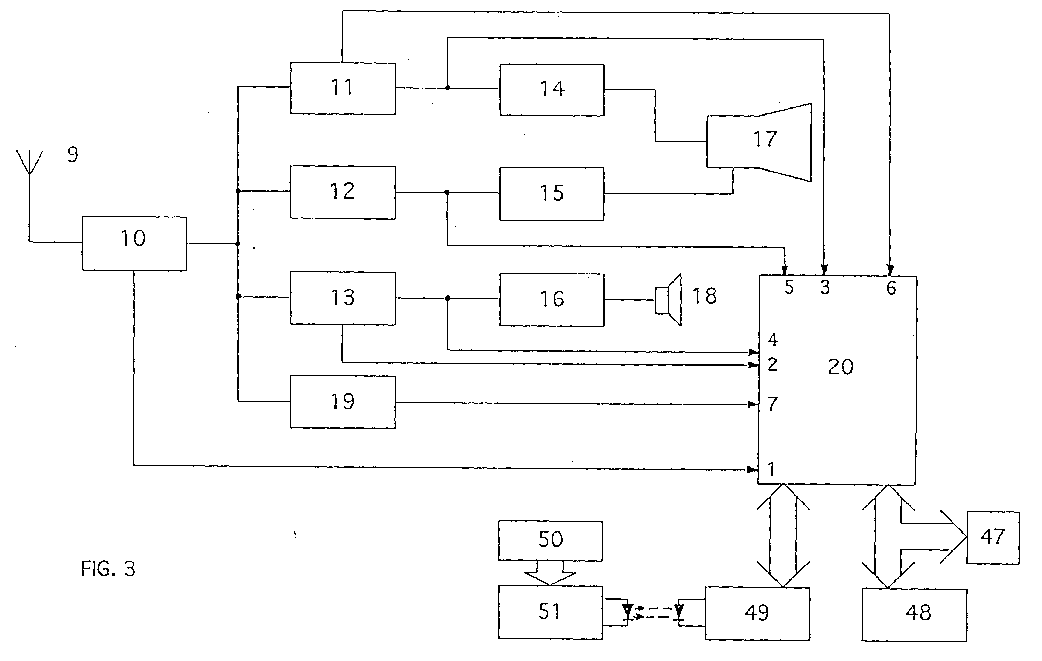

Figure 3 schematically represents the block diagram of the electrical circuit of the television according to the invention; in figure 3; reference number 10 indicates the block of the tuning and amplification circuits of the television signals received by the antenna 9; with reference number 11 the block of the decoding and matrixing circuits of the luminance and chrominace video signals is indicated; reference number 12 indicates the block of the extraction circuits of the synchronism video signals; reference number 13 indicates the block of the amplification and decoding circuits of the audio signal; reference number 14 indicates the block of the amplification circuits of the colour signals R,G,B; reference number 15 indicates the block of the deflexion signals generation circuits for the image display device; reference number 16 indicatesthe block of the amplification circuits of the audio signal; reference number 17 indicates the image display device, for example a coloured picture tube; reference number 18 indicates the sonorous reproduction device, for example a loud speaker; reference number 19 indicates the block of the circuits for the extraction and decoding of the teletext signal.

Finally reference number 20 indicates the block of the control circuits, being specific to the television according to the invention; block 20 may for example be realised utilising a microprocessor, joined to a read and write memory (RAM, indicated with reference number 47), preferably of the non-volatile type, and to a read only permanent memory (ROM, indicated with reference number 48).

In the first, teletext pages can be stored for example containing cookery recipes (Televideo by RAI transmits for instance at least one recipe daily on page 627); with this in mind the remote control unit TC can be provided with an appropriate memory key that, upon being pressed by the user, provides for storing in the RAM memory the displayed teletext page.

Stored in the ROM memory on the other hand, according to the invention, are not only the operative instructions for the microprocessor, but also a series of arranged recipes, making up a cookery book, to which the user may have access, guided by an appropriate operative menu, for consultation.

The two memories are connected to the control unit 20 by way of a bus, as is normal.

The control unit 20 is also connected to a circuit, indicated with reference number 49, that has the function of a receiver of signals of infrared rays, coming from the remote control unit TC, that comprises a transmitter, indicated with the reference number 51, and a command key board, indicated with reference number 50, to which the transmitter 51 is in turn connected.

The commands given by the user, by way of the key board 50, through the transmitter 51 and the receiver 49, reach the control unit 20, that provides to decode such commands and to carry out the appropriate operations so as that the commands are executed.

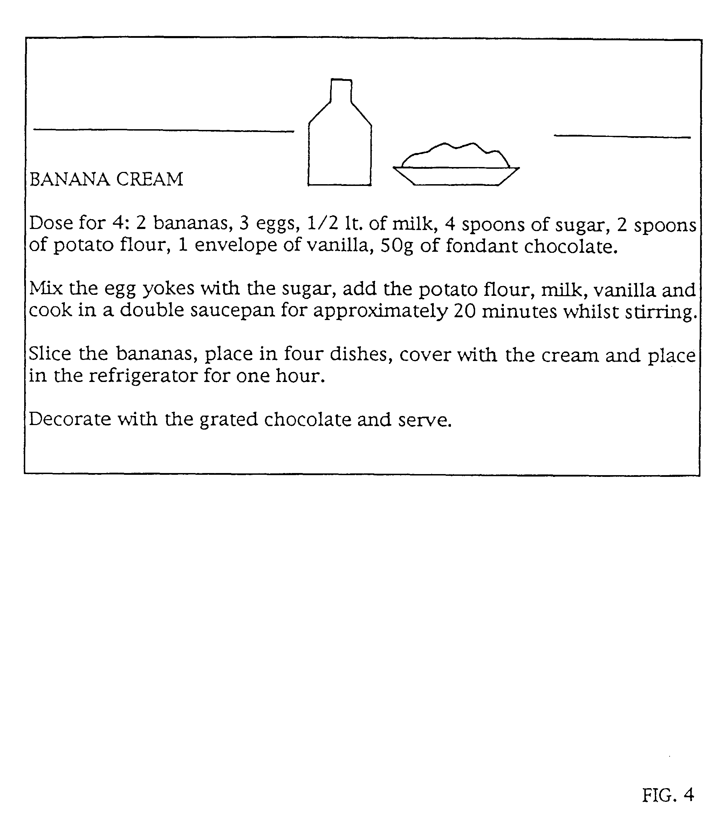

In figure 4 an example of a screen display is represented showing a cookery recipe.

The presentation of a screen display is provided in the form of a menu for guiding the user in the choice of the recipes stored in the ROM 48; in a preferred embodiment of the invention such menu allows for various possibilities of access, managed by the control circuit 20.

For example at least three possibilities can be provided:
- the usual way, in which access is given to sub-menus containing the recipes divided into categories (hors-d'oeuvre, soups, meat dishes, fish dishes, desserts, etc.);
- the way in which the recipes are divided based on the time of execution needed (recipes that can be carried out in half an hour, in an hour, in two hours, etc.);
- the way in which the recipes are divided based on the ingredients available: in this case the user indicates the ingredients that he or she has and the television will display the recipes that can be carried out using the indicated ingredients.

Advantageously the control unit 20 can be connected, by way of a bus, to an available external plug-socket, to which it is possible to connect other computerised electrical appliances so as to obtain a display of command data and control signals coming from the same.

From the given description the characteristics of the television subject of the present invention result in being clear, as do its advantages.

In particular, the television according to the invention results in being extremely practical for the user that in the kitchen can, so to say, combine the useful with amusement, being able to follow favourite television programs and always having the availability of a handy cookery book that will never be lost. The appropriate positioning of the television in the kitchen, and the specific positioning of the remote control unit, eases the consultation of the cookery book, without the user having to leave the vicinity of the cooker, that, as is known, requires constant surveillance.

It is clear that numerous variants can be made to the television subject of the present invention, without for this departing from the novelty principles inherent in the innovative idea, as it is also clear that in the practical realisation of the invention the materials and the form of the details illustrated can be different, and they may also be substituted by technically equivalent elements.

A possible variant could be that of providing the use of a part of the RAM 47 as a memorandum of notes of things to buy; in such a case the key board of the remote control will be able to generate alphanumeric signals; in particular, the ROM 48 could have a dictionary of the things that usually are needed in a kitchen and the remote control unit could provide the possibility of scrolling the items stored and, when those that are needed have been found, place them in the display of the memorandum.

## Claims

1. Television system, for use in a kitchen, comprising a television set provided with a non volatile electronic memory (ROM) (48) in which recipes for cooking are stored, characterized in that the television set has a cabinet forming part of the kitchen furniture, said television system further comprising a remote control unit (TC), said remote control unit (TC) being received within a housing located adjacent to a cooking hob, in a position such that the user may operate said remote control unit (TC) for controlling the television without removing the remote control unit (TC) from said housing and while performing cooking operations, said remote control unit being anchored to a support movable between a rest position in which it is received within said housing and a released position, in which the remote control unit can be pointed towards the television set.

2. Television system according to claim 1, characterized in that said housing is provided with spring means for releasing said remote control unit (TC) from said housing upon pressing the remote control unit, while keeping the remote control unit (TC) anchored to its support.

3. Television system according to claim 2, characterized in that said support for the remote control unit (TC) is adapted to be revolved in order to enable the released remote control unit (TC) to be pointed towards the television.

4. Television system according to any of the previous claims, characterized in that a series of pre-arranged recipes are stored in said memory (ROM) (48), said recipes making up a cookery book to which the user may access through a guiding operative menu.

5. Television system according to claim 4, characterized in that a listing of said recipes is provided divided into sub-group categories (hors-d'oeuvre, soups, meat dishes, fish dishes, desserts).

6. Television system according to claim 4, characterized in that a listing of said recipes is provided divided into sub-gropups based on the amount of required cooking time (half an hour, one hour, two hours, etc.).

7. Television system according to claim 4, characterized in that the possibility of searching for recipes is provided based on a list, introduced by the user, of the ingredients available.

8. Television system according to any of the previous claims, characterized in that the ROM type memory (48) is provided with a dictionary of terms used in cooking recipes.

9. Television system according to claim 8, characterized in that said remote control unit (TC) is able to scroll the terms of said dictionary stored in said ROM memory (48) on the display device (17) of the television set and to select that which has to be stored in a RAM memory (47) having the function of an electronic memorandum.

## Patentansprüche

1. Fernsehanlage zur Verwendung in einer Küche, welche einen Fernsehapparat aufweist, welcher mit einem permanenten elektronischen Speicher (ROM) (48) versehen ist, in welchem Kochrezepte gespeichert sind, dadurch gekennzeichnet, daß der Fernsehapparat ein schrankbildender Teil des Küchenmobiliars ist, wobei die Fernsehanlage weiterhin eine Fernbedienungseinheit (TC) aufweist, wobei diese Fernbedienungseinheit (TC) innerhalb eines Gehäuses, welches benachbart zu einer Kochstelle angeordnet ist, derartig aufgenommen ist, daß der Benutzer die Fernbedienungseinheit (TC) zum Steuern des Fernsehers bedienen kann, ohne die Fernbedienungseinheit (TC) aus dem Gehäuse herauszunehmen, und während Kochtätigkeiten durchgeführt werden, wobei die Fernbedienungseinheit an einer Stütze verankert ist, welche zwischen einer Ruhestellung, in welcher sie in dem Gehäuse aufgenommen ist, und einer freigegebenen Stellung bewegbar ist, in welcher die Fernbedienungseinheit in Richtung des Fernsehapparates gerichtet werden kann.

2. Fernsehanlage nach Anspruch 1, dadurch gekennzeichnet, daß das Gehäuse mit Federeinrichtungen ausgestattet ist, um die Fernbedienungseinheit (TC) aus dem Gehäuse durch Drücken der Fernbedienungseinheit freizugeben, wobei die Fernbedienungseinheit (TC) an seiner Stütze verankert bleibt.

3. Fernsehanlage nach Anspruch 2, dadurch gekennzeichnet daß die Stütze für die Fernbedienungseinheit (TC) so angepaßt ist, daß sie drehbar ist, damit die freigegebene Fernbedienungseinheit (TC) in Richtung des Fernsehers gerichtet werden kann.

4. Fernsehanlage nach einem der vorherigen Ansprüche, dadurch gekennzeichnet, daß eine Reihe von vorgefertigten Rezepten in dem Speicher (ROM) (48) gespeichert sind, wobei die Rezepte ein Kochbuch ausmachen, zu welchem der Benutzer durch ein begleitendes Bedienungsmenü Zugang haben kann.

5. Fernsehanlage nach Anspruch 4, dadurch gekennzeichnet, daß eine Auflistung der Rezepte vorgesehen ist, welche in Untergruppen-Kategorien (Hors-d'Oeuvre, Suppen, Fleischgerichte, Fischgerichte, Desserts) unterteilt ist.

6. Fernsehanlage nach Anspruch 4, dadurch gekennzeichnet, daß eine Auflistung der Rezepte vorgesehen ist, welche nach dem Betrag der benötigten Kochzeit (halbe Stunde, eine Stunde, zwei Stunden, etc.) in Untergruppen unterteilt ist.

7. Fernsehanlage nach Anspruch 4, dadurch gekennzeichnet, daß die Möglichkeit des Suchens nach Rezepten vorgesehen ist, welche auf einer Liste von möglichen Zutaten, welche durch den Benutzer eingegeben wird, basiert.

8. Fernsehanlage nach einem der vorherigen Ansprüche, dadurch gekennzeichnet, daß der ROM-Speicher (48) mit einem Wörterbuch mit Begriffen, welche für die Kochrezepte benutzt werden, versehen ist.

9. Fernsehanlage nach Anspruch 8, dadurch gekennzeichnet, daß die Fernbedienungseinheit (TC) in der Lage ist, die Begriffe des Wörterbuchs, welche im ROM Speicher (48) gespeichert sind, auf der Anzeige-Vorrichtung (17) des Fernsehapparates ablaufen zu lassen, und das auszuwählen, was in einem RAM-Speicher (47), welcher die Funktion eines elektronischen Merkzettels hat, gespeichert werden muß.

## Revendications

1. Système de télévision, destiné à être utilisé dans une cuisine, qui comprend un poste de télévision doté d'une mémoire électronique rémanente (ROM) (48) dans laquelle des recettes de cuisine ont été mémorisées, le système étant caractérisé en ce que le poste de télévision possède un coffret qui fait partie de l'équipement de la cuisine, ledit système de télévision comprenant en outre une unité de télécommande (TC), ladite unité de télécommance (TC) étant reçue à l'intérieur d'un logement placé au voisinage d'une plaque de cuisson, en une position telle que l'utilisateur peut manoeuvrer ladite unité de télécommande (TC) pour commander le poste de télévision sans retirer l'unité de télécommande (TC) dudit logement et tout en effectuant des opérations de cuisine, ladite unité de télécommande étant attachée à un support mobile entre une position de repos, dans laquelle il est reçu à l'intérieur dudit logement, et une position libre, dans laquelle l'unité de télécommande peut être pointée en direction du poste de télévision.

2. Système de télévision selon la revendication 1, caractérisé en ce que ledit logement est doté d'un moyen à ressort servant à libérer ladite unité de télécommande (TC) vis-à-vis dudit logement lorsqu'on appuie sur l'unité de télécommande, tout en maintenant l'unité de télécommande (TC) attachée à son support.

3. Système de télévision selon la revendication 2, caractérisé en ce que ledit support de l'unité de télécommande (TC) est conçu pour pouvoir tourner afin de permettre que l'unité de télécommande (TC) une fois libérée soit pointée en direction du poste de télévision.

4. Système de télévision selon l'une quelconque des revendications précédentes, caractérisé en ce qu'une série de recettes de cuisine aménagées à l'avance sont mémorisées dans ladite mémoire (ROM) (48), lesdites recettes constituant un livre de cuisine auquel l'utilisateur peut faire accès par l'intermédiaire d'un menu faisant fonction de guide.

5. Système de télévision selon la revendication 4, caractérisé en ce qu'une liste desdites recettes est prévue, qui est divisée en catégories de sous-groupes (hors-d'oeuvre. potages, plats de viande, plats de poisson, desserts).

6. Système de télévision selon la revendication 4, caractérisé en ce qu'une liste desdites recettes est prévue, qui est divisée en sous-groupes sur la base du temps de préparation nécessaire (une demi-heure, une heure, deux heures, etc.).

7. Système de télévision selon la revendication 4, caractérisé en ce qu'il est prévu une possibilité de rechercher des recettes sur la base d'une liste, introduite par l'utilisateur, des ingrédients disponibles.

8. Système de télévision selon l'une quelconque des revendications précédentes, caractérisé en ce que la mémoire du type ROM (48) est dotée d'un dictionnaire de termes utilisés dans les recettes de cuisine.

9. Système de télévision selon la revendication 8, caractérisé en ce que ladite unité de télécommande (TC) peut faire défiler les termes dudit dictionnaire mémorisé dans ladite mémoire ROM (48) sur le dispositif de visualisation (17) du poste de télévision et sélectionner ceux qui doivent être mémorisés dans une mémoire RAM (47) faisant fonction d'un aide-mémoire électronique.
